# EUROPEAN PATENT APPLICATION

(11) **EP 4 238 997 A1**
(43) Date of publication of application: **06.09.2023**
(21) Application number: 21885954.4
(22) Date of filing: 18.10.2021
(51) Int. Cl.: C08F 2/44, C08F 20/00, C09K 3/10, H01G 9/20

(54) **PHOTOCURABLE COMPOSITION**

(30) Priority: 30.10.2020 JP 2020182737
(71) Applicant: Kobayashi & Co., Ltd., Taito-ku, Tokyo 111-8620 (JP)
(72) Inventor: OHASHI, Yuri, Tokyo 124-0013 (JP); HOSHINO, Hayato, Tokyo 124-0013 (JP); HARADA, Wataru, Tokyo 124-0013 (JP)
(74) Representative: TBK
(86) International application number: PCT/JP2021/038391
(87) International publication number: WO 2022/091835

(57) **Abstract**

[Problems]

To provide a photocurable composition that can be used for sealing materials with lower moisture permeability.

[Solution]

The present invention provides a photocurable composition containing a photocurable acrylic resin component and a clay mineral powder. The photocurable composition can be used for sealing solar batteries. The photocurable composition can be used for sealing electronic devices. The present invention can provide a cured product of the photocurable composition. The present invention can provide a solar battery containing a cured product of the photocurable composition as a sealing material. The present invention can provide an electronic device containing a cured product of the photocurable composition as a sealing material.

## Description

### Technical field

The present invention relates to a photocurable composition.

### Background Art

Photocurable compositions are used, for example, as sealing materials for solar batteries or electronic devices. As solar batteries, for example, solar batteries using silicon or inorganic compound materials, and solar batteries using organic compounds for a light absorption layer have been developed. As solar batteries using organic compounds, dye-sensitized solar batteries and organic thin-film type solar batteries have been developed.

A dye-sensitized solar battery is a solar battery that converts light energy into electricity using a dye, and is attracting attention as a next-generation solar battery. A dye-sensitized solar battery generally has a structure in which an electrolytic solution is encapsulated between two conductive substrates. Encapsulation of the electrolytic solution is important for the durability of the dye-sensitized solar battery. Several techniques have been proposed so far for encapsulating the electrolytic solution.

For example, Patent Literature 1 discloses a photocurable sealing agent for dye-sensitized solar battery, containing (A) 100 parts by weight of a (meth)acrylate having a linear aliphatic hydrocarbon having 10 to 20 carbon atoms in the molecule, (B) 5 to 15 parts by weight of an alicyclic (meth)acrylate, (C) 10 parts by weight or more of a styrene-based thermoplastic elastomer represented by a specific general formula, and (D) a photopolymerization initiator as the main components. Moreover, Patent Literature 2 discloses a photocurable composition containing a specific monofunctional (meth)acrylate, a saturated thermoplastic elastomer, and a photopolymerization initiator.

### Citation List

### Patent Literature

Patent Literature 1: JP-A No. 2005-302564
Patent Literature 2: JP-A No. 2010-180324

### Summary of Invention

### Technical Problem

To improve the durability of solar batteries, it is important to improve the performance of the sealing material used to encapsulate the electrolytic solution. For example, when external water vapor permeates the sealing material and comes into contact with the electrolytic solution, the conversion efficiency of light energy into electricity decreases. Therefore, the sealing material is required to have low moisture permeability.

For electronic devices, the sealing materials used to encapsulate the elements are also important. For example, electronic devices such as liquid crystals and organic ELs have a structure in which an element is encapsulated in a resin composition, and it is desirable that the element does not come into contact with water vapor. Therefore, in order to protect the device from water vapor, the sealing material used for encapsulating the device is required to have low moisture permeability.

Based on the above, an object of the present invention is to provide a sealing material having low moisture permeability.

### Solution to Problem

As a result of intensive studies, the present inventors have found that a cured product of a photocurable composition containing a photocurable acrylic resin component and a clay mineral powder has low moisture permeability and can be used as an excellent sealing material.

That is, the present invention provides a photocurable composition containing a photocurable acrylic resin component and a clay mineral powder.

The clay mineral powder may contain two or more powders having different average particle sizes D50.

The clay mineral powder may be talc and/or mica.

The photocurable composition may further contain a thermoplastic resin.

According to one embodiment of the present invention, the photocurable composition may be for sealing solar batteries.

According to one embodiment of the invention, the photocurable composition may be for sealing electronic devices.

The present invention also provides a cured product of the photocurable composition.

The present invention also provides a solar battery containing a cured product of the photocurable composition as a sealing material.

The present invention also provides an electronic device containing a cured product of the photocurable composition as a sealing material.

### Advantageous Effects of Invention

By this invention, a photocurable composition which can be used for the sealing material having lower moisture permeability can be provided.

Note that the effect of the present invention is not necessarily limited to the effects described here, and may be any of the effects described in the present specification.

### Brief Description of Drawings

FIG. 1 is a view showing an example of the structure of a dye-sensitized solar battery.
FIG. 2 is a view showing an example of the structure of an electronic device.
FIG. 3 is a view showing an example of a method for manufacturing a dye-sensitized solar battery.

### Description of Embodiments

Hereinafter, the embodiments for implementing the present invention is demonstrated in detail. It should be noted that the embodiments described below are examples of representative embodiments of the present invention, and the present invention is not limited only to these embodiments.

### 1. Photocurable composition

The present invention provides a photocurable composition containing a photocurable acrylic resin component and a clay mineral powder. A cured product of the composition has lower moisture permeability. Therefore, the photocurable composition is suitable for use as a sealing material in, for example, solar batteries and electronic devices. Hereinafter, the effects of the present invention will be described in more detail, showing specific structural examples of solar batteries and electronic devices.

### 1-1. Specific structural examples of solar batteries and electronic devices

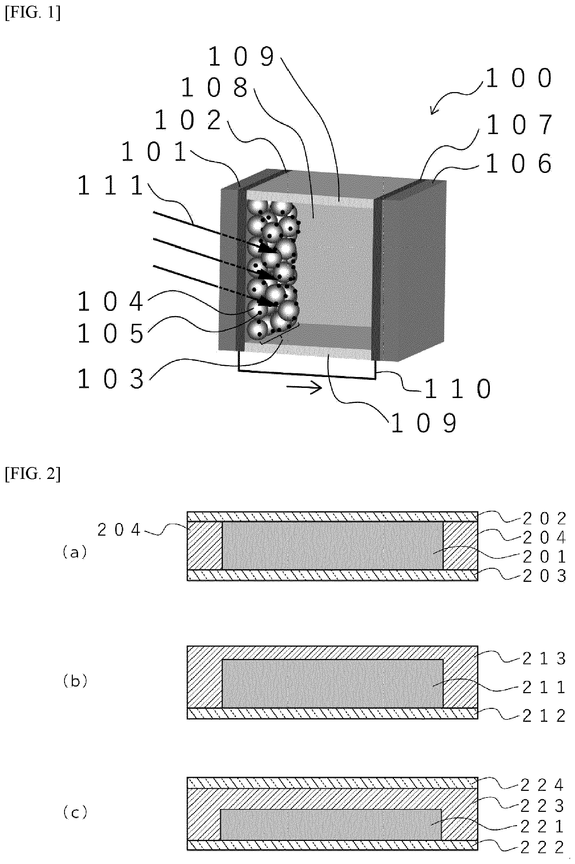

FIG. 1 shows a schematic view of the basic structure of a dye-sensitized solar battery among solar batteries. FIG. 1 is a view schematically showing an example of the cross section of a dye-sensitized solar battery. A dye-sensitized solar battery 100 shown in FIG. 1 has a transparent substrate 101 laminated with a transparent conductive film (Transparent Conducting Oxide: TCO) 102 . A porous metal oxide semiconductor layer 103 made of metal oxide semiconductor particles 104 is formed on the surface of the transparent conductive film 102 opposite to the contact surface with the transparent substrate 101 . The metal oxide semiconductor layer 103 can be formed, for example, by baking metal oxide semiconductor particles such as porous titanium oxide. A dye 105 is adsorbed to the metal oxide semiconductor particles 104. A substrate 106 is arranged so as to face the transparent substrate 101, and a conductive film 107 is laminated on the surface of the substrate 106 on the transparent substrate 101 side. A space 108 between the transparent conductive film 102 and the conductive film 107 is filled with an electrolytic solution. A sealing material 109 is provided to encapsulate the electrolytic solution in the space 108 . The sealing material 109 is adhered to the transparent conductive film 102 and the conductive film 107.

The light applied to the dye-sensitized solar battery 100 passes through the transparent substrate 101 and the transparent conductive film 102 and reaches the metal oxide semiconductor layer 103. The light is absorbed by a dye 105 of the metal oxide semiconductor layer 103 and electrons are emitted from the dye 105. The electrons move to the metal oxide semiconductor layer 103, propagate through the transparent conductive film 102, pass through a circuit 110, and reach the conductive film 107 on the counter electrode. A reduction reaction occurs due to the electrons, and iodide ions (I⁻), for example, are generated in the electrolytic solution. The iodide ion gives an electron to the dye 105 and is oxidized again. By repeating the above cycle, light energy is converted into electric energy.

A solid electrolyte may be used instead of the electrolytic solution. A dye-sensitized solar battery using a solid electrolyte is also called an all-solid-type dye-sensitized solar battery.

In the dye-sensitized solar battery 100, it is undesirable for external water vapor to permeate the sealing material 109 and come into contact with the electrolytic solution, because it will reduce the efficiency of converting light into electricity. The permeation of external moisture is undesirable even if the dye-sensitized solar battery is an all-solid type. Therefore, a sealing material having lower moisture permeability is desired.

The cured product of a photocurable composition of the present invention has lower moisture permeability by containing the photocurable acrylic resin component and the clay mineral powder as components of the photocurable composition. Therefore, the photocurable composition of the present invention is suitable for use for forming a sealing material for solar batteries such as dye-sensitized solar batteries.

Elements of electronic devices such as organic ELs and liquid crystals are often encapsulated with sealing materials. Sealing materials are used to protect the elements of electronic devices from the outside, for example, to protect the elements from water vapor. An example of an encapsulation pattern for elements of an electronic device is shown in FIG. 2.

In FIG. 2 (A), an element 201 to be protected from the outside is sandwiched between a pair of substrates 202 and 203 such as glass or film, and the sides of the element are surrounded by a sealing material 204. FIG. 2 (A) shows the element sealing by a so-called frame sealing method, but the method is not limited to this.

In FIG. 2 (B), an element 211 is placed on a single substrate 212, and the entire element 211 other than the portion in contact with the substrate is sealed with a sealing material 213. FIG. 2 (B) shows the element sealing by a so-called all-surface sealing method.

FIG. 2 (C) shows a sealing method in which a substrate 224 is further laminated on the sealing material 223 of the full-surface sealing structure shown in FIG. 2 (B). That is, the element 221 is placed on one substrate 222 , and all parts of the element 221 other than the portion in contact with the substrate are sealed with a sealing material 223, and a substrate 224 is laminated to the sealing material 223 so as to face the substrate 222.

Also in an electronic device, it is undesirable for external moisture to permeate the sealing material and come into contact with the element. For example, in an organic EL panel, water vapor permeates the sealing material and contacts the element, thereby reducing the light emitting area. Therefore, it is desirable that the sealing material has low moisture permeability also in the element of the electronic device.

A cured product of the photocurable composition of the present invention has lower moisture permeability by containing the photocurable acrylic resin component and the clay mineral powder as components of the photocurable composition. Therefore, the photocurable composition of the present invention is suitable for use as a sealing material for electronic devices.

### 1-2. Each component of photocurable composition

The photocurable acrylic resin component, the clay mineral powder, and the like contained in the photocurable composition of the present invention are described below, respectively.

### [Photocurable acrylic resin component]

The photocurable composition according to the present invention contains a photocurable acrylic resin component. The photocurable acrylic resin component is not particularly limited, and is preferably, for example, one or more selected from monofunctional (meth)acrylate monomers, polyfunctional (meth)acrylate monomers, photocurable oligomers, and the like. The photocurable acrylic resin component used can be produced by a publicly known production method, and a commercially available product can be used.

The photocurable composition of the present invention suitably contains a (meth)acrylate monomer, more preferably contains at least a monofunctional (meth)acrylate monomer, and may further contain a polyfunctional (meth)acrylate monomer and/or a photocurable oligomer.

In the present invention, "(meth)acrylate" means acrylate or methacrylate or a mixture thereof.

### <Monofunctional (meth)acrylate monomer>

The photocurable acrylic resin component contained in the photocurable composition of the present invention preferably contains a monofunctional (meth)acrylate monomer.

In the present invention, a monofunctional (meth)acrylate monomer means that one molecule has one photopolymerizable carbon-carbon double bond, that is, has one acryloyl group or methacryloyl group (hereinafter referred to also as "(meth)acryloyl group").

The total carbon number of the monofunctional (meth)acrylate monomer is preferably 13 or more, and more preferably 13-16. This can contribute to improving the low moisture permeability of a cured product.

The monofunctional (meth)acrylate monomer is preferably an alicyclic monofunctional (meth)acrylate monomer, but is not limited thereto.

In the present invention, alicyclic means having one alicyclic hydrocarbon group in one molecule. That is, the alicyclic monofunctional (meth)acrylate monomer is a monofunctional (meth)acrylate monomer in which the ester residue [R of - C(=O)OR] is an alicyclic hydrocarbon group. The alicyclic hydrocarbon group may have no substituent, or may have a substituent as long as the effects of the present invention are not impaired.

The alicyclic monofunctional (meth)acrylate monomer preferably has a dicyclopentanyl structure, a dicyclopentenyl structure, an adamantyl structure, or an isobornyl structure, and more preferably a dicyclopentanyl structure, an adamantyl structure, or an isobornyl structure. That is, the alicyclic hydrocarbon group possessed by the monomer is preferably a dicyclopentanyl group, a dicyclopentenyl group, an adamantyl group, or an isobornyl group. The fact that the alicyclic hydrocarbon group contained in the alicyclic monofunctional (meth)acrylate monomer has any of these structures can contribute to improving the low moisture permeability of a cured product.

In addition, the alicyclic monofunctional (meth)acrylate monomer may have a polar group or a hydrolyzable silyl group within a range that does not impair the effects of the present invention, from the viewpoint of improving the adhesiveness of a cured product. Examples of the polar group include one or more selected from a carboxyl group, a phosphoric acid group, a hydroxyl group, an amino group, and the like.

The alicyclic monofunctional (meth)acrylate monomer is, more specifically, preferably dicyclopentanyl (meth)acrylate and/or dicyclopentenyl (meth)acrylate, more preferably dicyclopentanyl (meth)acrylate, and further preferably dicyclopentanyl acrylate.

One or more selected from the group consisting of the above-mentioned "monofunctional (meth)acrylate monomer" compounds may be used.

### <Polyfunctional (meth)acrylate monomer>

The photocurable acrylic resin component contained in the photocurable composition of the present invention preferably contains a polyfunctional (meth)acrylate monomer. Thereby, toughness of a cured product can be improved.

In the present invention, the polyfunctional (meth)acrylate monomer means that one molecule has two or more photopolymerizable carbon-carbon double bonds, that is, has two or more (meth)acryloyl groups. "Polyfunctional" in the polyfunctional (meth)acrylate monomer means that the number of (meth)acryloyl groups is, for example, 2 or more, more preferably 2 to 10, further preferably 2 to 6.

Among polyfunctional (meth)acrylate monomers, bifunctional (meth)acrylate monomers are preferred, and more preferably is a bifunctional (meth)acrylate monomer which is an ester compound of two or more (meth)acrylic acids and a polyhydric alcohol (more suitably a dihydric alcohol).

Among these, 1,9-nonanediol di(meth)acrylate and/or tricyclodecanedimethanol di(meth)acrylate are preferred from the viewpoint of improving the low moisture permeability of a cured product, but the polyfunctional (meth)acrylate monomer is not limited to these.

The polyfunctional (meth)acrylate monomer contained in the photocurable composition of the present invention may be one or more selected from the group consisting of the above-mentioned "polyfunctional (meth)acrylate monomer" compounds.

In addition, the polyfunctional (meth)acrylate monomer may have a polar group from the viewpoint of improving the low moisture permeability of a cured product and improving the adhesiveness thereof. As the configuration of the polar group, the configuration of the polar group described for the monofunctional (meth)acrylate monomer can be appropriately adopted within a range in which the effects of the present invention are not impaired.

### <Photocurable oligomer>

The photocurable acrylic resin component contained in the photocurable composition of the present invention preferably contains a photocurable oligomer from the viewpoint of improving the toughness of a cured product.

As the photocurable oligomer, a (meth)acrylate oligomer containing one or several (meth)acryloyl groups in the oligomer molecular structure is preferred.

The (meth)acrylate oligomer is preferably a copolymer of a (meth)acrylate monomer and a monomer or oligomer other than the (meth)acrylate, and examples of the monomer or oligomer other than the (meth)acrylate include, but are not limited to, carbamate and the like.

The (meth)acrylate oligomer may be a (meth)acrylate oligomer having one or more skeletons selected from, for example, a urethane skeleton, an epoxy skeleton, an acrylic skeleton, an ether skeleton, a butadiene skeleton, an isoprene skeleton, an ester skeleton, and the like. Among these, one or more selected from a urethane skeleton, a butadiene skeleton, and an isoprene skeleton are preferred, and a (meth)acrylate oligomer having a urethane skeleton is more preferred. By using a (meth)acrylate oligomer as a raw material of a photocurable composition, the toughness of a cured product can be improved.

The (meth)acrylate oligomer preferably has 1 or more, more preferably 1 to 20, and further preferably 1 to 10 (meth)acryloyl groups in the oligomer molecular structure. The (meth)acrylate oligomer may have a substituent.

Examples of the (meth)acrylate oligomer include, but are not limited to, polyether-based urethane (meth)acrylate oligomers, polyurethane-based (meth)acrylate oligomers, polyester-based (meth)acrylate oligomers (suitably polyester-based urethane (meth)acrylate oligomers), polyepoxy-based (meth)acrylate oligomers, polyester-based (meth)acrylate oligomers, silicon-based (meth)acrylate oligomers, polybutadiene or hydrogenated polybutadiene (meth)acrylate oligomers (suitably polybutadiene-based urethane (meth)acrylate) oligomers, and polyisoprene-based (meth)acrylates (suitably polyisoprene-based urethane (meth)acrylate) oligomers. Among these, one or more selected from polyurethane-based (meth)acrylates, polybutadiene-based (meth)acrylates, and polyisoprene-based (meth)acrylates are preferable, and further polyisoprene-based urethane acrylates and/or polybutadiene-based urethane acrylates are more preferred.

The photocurable oligomer contained in the photocurable composition of the present invention may be one or more selected from the group consisting of the photocurable oligomer compounds mentioned above.

The weight-average molecular weight of the (meth)acrylate oligomer is preferably 500 to 30,000, more preferably 1,000 to 10,000, and further preferably 1,500 to 10,000, in terms of standard polystyrene-equivalent value measured by a GPC method (column temperature 40°C).

The photocurable acrylic resin component may contain a monofunctional or polyfunctional (meth)acrylate monomer other than those described above, or photocurable oligomers, and the like, as long as the effects of the present invention are not impaired. As a monofunctional or polyfunctional (meth)acrylate monomer other than those described above, for example, a (meth)acrylate monomer having at least one or two or more functional groups selected from the group consisting of a vinyl ether group, an epoxy group, and an oxetanyl group may be contained.

The proportion of the monofunctional (meth)acrylate monomer in 100 parts by mass of the photocurable acrylic resin component contained in the photocurable composition of the present invention is not particularly limited, but the lower limit is preferably 50 parts by mass or more, more preferably 60 parts by mass or more, still more preferably 70 parts by mass or more, further more preferably 80 parts by mass or more, still further preferably 90 parts by mass or more, and still more further preferably 95 parts by mass or more, and the upper limit is preferably 100 parts by mass or less, and more preferably 98 parts by mass or less.

When further containing a polyfunctional (meth)acrylate monomer and a photocurable oligomer, in addition to the monofunctional (meth)acrylate monomer, as a photocurable acrylic resin component in the photocurable acrylic resin, the proportion of the monofunctional (meth)acrylate monomer in 100 parts by mass of the photocurable acrylic resin component may be 50 parts by mass or more, preferably 60 parts by mass or more, and more preferably 70 parts by mass or more as the lower limit, and may be more preferably 90 parts by mass or less, further preferably 85 parts by mass or less, and still further preferably 80 parts by mass or less as the upper limit. This can contribute to improving the low moisture permeability of a cured product.

The total amount of the monofunctional (meth)acrylate monomer, the polyfunctional (meth)acrylate monomer and the photocurable oligomer contained in the photocurable composition of the present invention is taken as 100 parts by mass of the photocurable acrylic resin component.

The proportion of the polyfunctional (meth)acrylate monomer in 100 parts by mass of the photocurable acrylic resin component is preferably 1 part by mass or more, and more preferably 3 parts by mass or more as the lower limit, and is preferably 10 parts by mass or less, more preferably 8 parts by mass or less, still more preferably 5 parts by mass or less as the upper limit, and further more preferably 3 to 8 parts by mass.

The proportion of the photocurable oligomer in 100 parts by mass of the photocurable acrylic resin component is preferably 3 parts by mass or more, and more preferably 5 parts by mass or more as the lower limit, and is preferably 30 parts by mass or less as the upper limit, and more preferably 5 to 25 parts by mass.

The total proportion of the polyfunctional (meth)acrylate monomer and the photocurable oligomer in 100 parts by mass of the photocurable acrylic resin component is preferably 5 parts by mass or more, more preferably 10 parts by mass or more, and still more preferably 15 parts by mass or more as the lower limit, and is preferably 30 parts by mass or less, more preferably 25 parts by mass or less as the upper limit, and still more preferably 15 to 25 parts by mass.

### [Clay mineral powder]

The photocurable composition of the present invention contains a clay mineral powder. By containing the clay mineral powder in the photocurable composition, it is possible to prevent moisture from penetrating into the interior through a cured product. By containing the clay mineral powder in this way, the moisture permeability of a cured product of the composition can be further reduced.

A layered silicate mineral is preferable as the clay mineral in the present invention. Examples of clay minerals include, but are not limited to, talc, mica, kaolin, smectite, vermiculite, and the like. The clay mineral in the present invention may be one or more selected from these.

Among these, talc and/or mica are preferable from the viewpoint of improving the low moisture permeability of a cured product. Mica is good from the viewpoint of lowering the moisture permeability of a cured product, and talc is good from the viewpoint of better dispersibility in a cured product, and talc is more preferable from the viewpoint of improving the dispersibility and improving the low moisture permeability of a cured product.

The average particle size (D50) of the clay mineral powder is not particularly limited, and its suitable lower limit is preferably 0.1 µm or more, more preferably 0.5 µm or more, and its suitable upper limit is preferably 20 µm or less, more preferably 15 µm or less, and still more preferably 10 µm or less. The suitable numerical range is more preferably 0.5 to 10 µm. By adjusting the average particle size contained in the photocurable composition, the moisture permeability of a cured product can be further reduced.

The photocurable composition of the present invention preferably contains two or more clay mineral powders having different average particle sizes (D50's). Using a combination of two or more of clay mineral powders having different average particle sizes can further reduce the moisture permeability of a cured product, rather than using a single clay mineral powder. When two or more of clay mineral powders having different average particle sizes are contained in the photocurable composition, a plurality of clay mineral powders may be added separately to the photocurable composition, or a mixed powder in which a plurality of clay mineral powders are mixed may be added to photocurable composition. Further, the difference in average particle size between different powders is preferably 1 to 5 µm, and more preferably 2 to 4 µm.

Further, when the two or more of powders having different average particle sizes are powders composed of a first powder and a second powder having a larger average particle size than the first powder, the mass ratio of the first powder to the second powder is preferably 1 to 10: 10 to 1, more preferably 1 to 7:7 to 1, still more preferably 1 to 5:5 to 1, further more preferably 1 to 3:3 to 1, and still further preferably 1 to 2:2 to 1. In addition, when the average particle size (D50) of the first powder is smaller than that of the second powder, the particle size ratio of the two, that is, the first powder (D50): the second powder (D50) is preferably 1: 1 to10, more preferably 1: 1 to 7, and further preferably 1: 1 to 5.

The average particle size of the first powder is preferably in the range of 0.1 to 2.5 µm, and more preferably in the range of 0.5 to 2 µm. In addition, the average particle size of the second powder, which has an average particle size relatively larger than that of the first powder, is preferably in the range of 0.5 to 20 µm, more preferably in the range of 3 to 20 µm, even more preferably in the range of 3 to 6 µm, and still more preferably in the range of 4-5 µm. By adjusting the particle size distribution of the clay mineral powder used, the moisture permeability of a cured product can be further reduced.

The average particle size in the present invention means "particle size (D50)". The particle size (D50) is a volume-based median diameter (D50) weighted by volume, and is measured according to JIS Z8825. The particle size can be measured according to a laser diffraction particle size analysis method, for example, using a particle size analysis measuring device (SALD-2200, Shimadzu Corporation).

Examples of the powder shape of the clay mineral powder include, but are not limited to, spherical, massive, rod-like, plate-like shapes, and the like. One or two or more selected from these can be used. Among these, the plate-like shape is preferable.

The clay mineral powder can be produced by a publicly known method by synthesizing or pulverizing clay minerals as a raw material, or a commercially available product may be used. Furthermore, the clay mineral powder is preferably composite or surface-treated from the viewpoint of improving the low moisture permeability and improving the dispersibility of a cured product.

In addition, a clay mineral powder obtained by surface-treating the raw material powder by a general surface treatment method is more preferable from the viewpoint of improving the low moisture permeability of a cured product, and a clay mineral powder obtained by surface-hydrophobization treatment is further preferred. Examples of the surface treatment agent include, but are not limited to, oils, silicone compounds, fluorine compounds, coupling agents, N-acylated amino acids, metallic soaps, and the like. One or more of these can be selected.

Among these, coupling agents are preferred, and examples of such coupling agents include, but are not limited to, fluorine-based compounds such as perfluoroalkylalkoxysilane and the like; silane coupling agents such as alkyltrialkoxysilane and the like; and titanium coupling agents such as long-chain alkoxytitanium and the like. One or two or more selected from these can be used. Among these, a silane coupling agent is more preferable.

As the clay mineral powder contained in the photocurable composition of the present invention, one or more selected from the group consisting of the above-mentioned "clay mineral powder" compounds may be used.

The content of the clay mineral powder in the photocurable composition is not particularly limited, and its suitable lower limit value is preferably 1 part by mass or more, more preferably 5 parts by mass or more, even more preferably 10 parts by mass or more, still more preferably 20 parts by mass or more, further preferably 30 parts by mass or more, even further preferably 50 parts by mass or more, still further preferably 60 parts by mass or more, and more preferably 70 parts by mass or more, while its suitable upper limit value is not particularly limited, and it is preferably 150 parts by mass or less, more preferably 120 parts by mass or less, and still more preferably 100 parts by mass or less, with respect to 100 parts by mass of the photocurable acrylic resin component. The suitable numerical range is more preferably 30 to 100 parts by mass, and still more preferably 50 to 100 parts by mass. Thereby, the low moisture permeability of a cured product can be further improved.

### [Thermoplastic resin]

The photocurable composition of the present invention preferably contains a thermoplastic resin from the viewpoint of improving the toughness of a cured product. A thermoplastic resin may be used to improve the toughness of a cured product.

The thermoplastic resin is not particularly limited as long as it has thermoplasticity, and examples thereof include, but are not limited to, thermoplastic elastomers, terpene-based resins, aliphatic hydrocarbon resins, petroleum-based resins, and the like. The thermoplastic resin is preferably a hydrogenated product, and examples of the hydrogenated product include, but are not limited to, hydrogenated thermoplastic elastomers, aliphatic saturated hydrocarbon resins, and the like, and among them, hydrogenated thermoplastic elastomers and/or aliphatic saturated hydrocarbon resins are more preferred. The thermoplastic resin may be produced by a publicly known production method and used, or a commercially available product may be used.

Examples of the thermoplastic elastomers include, but are not limited to, polystyrene, olefin/alkene, polyvinyl chloride, polyurethane, polyester, polyamide, and hydrogenated products thereof, and the like. Among these, hydrogenated styrene thermoplastic elastomers are preferred.

The terpene-based resins include, for example, terpene resins, modified terpene resins, hydrogenated terpene resins, and the like. Terpenes are a group of compounds based on the isoprene rule, and are a general term for compounds containing an isoprene unit ((C₅H₈) n:n is a structural unit). Rosins include rosin acids, which are carboxylic acids of compounds composed of 4 isoprene units (C20) (specifically, tricyclic diterpenes), and are included in terpenes in a broad sense. Therefore, in the present specification, terpene-based resins may include rosin-based resins. Examples of the rosin-based resin include rosin resins, rosin ester resins, hydrogenated rosin resins, hydrogenated rosin ester resins, polymerized rosin resins, polymerized rosin ester resins, modified rosin resins, and the like. One or 2 or more types selected from these may be used. Among these, hydrogenated terpene resins and/or hydrogenated rosin resins are more preferred.

Examples of the petroleum-based resins include aliphatic or aromatic petroleum resins, hydrogenated petroleum resins, modified petroleum resins, alicyclic petroleum resins, coumarone-indene petroleum resins, styrene resins, and the like. One or 2 or more types selected from these may be used. Among these, hydrogenated petroleum resins are more preferred, and further, hydrogenated aromatic petroleum resins are even more preferred.

Among the above aliphatic hydrocarbon resin compounds, hydrogenated terpene resins and/or hydrogenated petroleum resins are more preferable from the viewpoint of improving the low moisture permeability of a cured product.

When the thermoplastic resin is a thermoplastic elastomer, the MFR (230°C, 2.16 kg) of the thermoplastic elastomer is preferably 50 g/10 min or less, more preferably 30 g/10 min or less, even more preferably 20 g/10 min or less, still more preferably 10 g/10 min or less, and further preferably 5 g/10 min or less. By adjusting the MFR of the thermoplastic resin, the low moisture permeability of a cured product can be improved.

In the present invention, MFR (Melt flow rate) is expressed in unit of g/10 min, and is measured in accordance with JIS K7210 under the conditions of 230°C, 2.16 kg load, and 10 minutes.

When the thermoplastic resin is an aliphatic hydrocarbon resin, the suitable lower limit value of the Tg of the resin is preferably 100°C or higher, more preferably 105°C or higher, even more preferably 120°C or higher, and still more preferably 125°C or higher, and the suitable upper limit value thereof is not particularly limited, and it may be, for example, 260°C or lower, 230°C or lower, or 200°C or lower. By adjusting the Tg of the thermoplastic resin, the low moisture permeability of a cured product can be improved.

In the present invention, a Tg is the Tg of a polymer composed of only one resin component and measured by a differential scanning calorimeter (DSC).

In addition, one or more selected from the group consisting of the above-mentioned "thermoplastic resin" compounds may be used.

The content of the thermoplastic resin in a photocurable composition is not particularly limited, and from the viewpoint of improving the low moisture permeability and the toughness of a cured product, the suitable lower limit value thereof is preferably 10 parts by mass or more, and more preferably 15 parts by mass or more, and the suitable upper limit value thereof is not particularly limited, and it may be 100 parts by mass or less, 90 parts by mass or less, 80 parts by mass or less, 70 parts by mass or less, or the like, with respect to 100 parts by mass of the photocurable acrylic resin component.

The content of the thermoplastic elastomer in a photocurable composition is not particularly limited, and from the viewpoint of improving the low moisture permeability and the toughness of a cured product, the suitable lower limit value thereof is preferably 0.1 parts by mass or more, more preferably 1 part by mass or more, even more preferably 3 parts by mass or more, and still more preferably 5 parts by mass or more, and the suitable upper limit value thereof is preferably 20 parts by mass or less, more preferably 15 parts by mass or less, and even more preferably 10 parts by mass or less, with respect to 100 parts by mass of the photocurable acrylic resin component.

In addition, the content of the aliphatic hydrocarbon resin in a photocurable composition is not particularly limited, and from the viewpoint of improving the low moisture permeability and the toughness of a cured product, the suitable lower limit value thereof is preferably 40 parts by mass or more, more preferably 50 parts by mass or more, and still more preferably 60 parts by mass or more, and the suitable upper limit value thereof is not particularly limited, and it may be 100 parts by mass or less, 90 parts by mass or less, 80 parts by mass or less, 70 parts by mass or less, or the like, with respect to 100 parts by mass of the photocurable acrylic resin component.

### [Optional component]

The photocurable composition of the present invention may contain optional components used in a photocurable composition, such as, for example, adhesiveness imparting agents, inorganic or organic fillers, polymerization initiators, antifoaming agents, surfactants, curing agents, flame retardants, and the like within a range that does not impair the effects of the present invention, and one or more selected from these may be used.

### <Adhesiveness imparting agent>

The adhesiveness imparting agent is not particularly limited, and includes, for example, (meth)acrylates having a polar group, tackifier resins, coupling agents, and the like, and one or more selected from these can be used. This can enhance the adhesiveness of a cured product.

The (meth)acrylate having a polar group is other than the monofunctional or polyfunctional (meth)acrylate monomer described above, and the polar group is one or more selected from, for example, a carboxyl group, a phosphoric acid group, a hydroxyl group, and an amino group.

The coupling agent is not particularly limited, and includes, for example, silane coupling agents, titanium coupling agents, aluminum coupling agents, and the like, and is one or more selected from these.

The amount of the adhesiveness imparting agent is not particularly limited, and its content proportion may be preferably 0.1 to 10 parts by mass, and more preferably 0.1 to 5 parts by mass with respect to 100 parts by mass of the photocurable acrylic resin component. Also, a coupling agent may be contained at a content proportion of 1 to 5 parts by mass with respect to 1 part by mass of the (meth)acrylate having a polar group.

Further, when a tackifier resin is used as the adhesiveness imparting agent, the amount of the tackifier resin is preferably 0.05 to 5 parts by mass, more preferably 0.05 to 4 parts by mass, and further preferably 0.1 to 2 parts by mass with respect to 100 parts by mass of the photocurable acrylic resin component. Within this range, the adhesiveness of a cured product can be further improved, whereby a sealing material having low moisture permeability and excellent adhesiveness can be provided.

### <Additive>

As an additive, for example, a surfactant, an antifoaming agent, and the like can be contained.

Examples of the surfactant include, but are not limited to, fluorine-based surfactants, silicone-based surfactants, alkyl-based surfactants, polyacrylate-based surfactants, and the like. Among these, polyacrylate-based surfactants are preferred.

Examples of the antifoaming agent include, but are not limited to, silicone-based antifoaming agents such as dimethyl silicone, alkyl-modified silicone, phenyl-modified silicone, fluorine-modified silicone and the like, and polyacrylate-based antifoaming agents. Among these, silicone antifoaming agents are preferred.

The amount of the additive is not particularly limited, and the content proportion of the additive may be preferably 0.1 to 10 parts by mass, and more preferably 1 to 5 parts by mass with respect to 100 parts by mass of the photocurable acrylic resin component. Also, the antifoaming agent may be contained at a content proportion of 0.5 to 5 parts by mass with respect to 1 part by mass of the surfactant.

### <Filler>

The photocurable composition of the present invention may contain a filler other than the clay mineral powder described above. By adjusting the amount of the filler, the viscosity of the photocurable composition can be adjusted. The filler is, for example, preferably an inorganic filler, and examples of the inorganic filler include, but are not limited to, silica, alumina, titanium oxide, calcium carbonate, boron nitride, aluminum nitride, and the like. For example, fumed silica (e.g., hydrophobic fumed silica, hydrophilic fumed silica) having a specific surface area of 100 to 500 m²/g, preferably 200 to 400 m²/g, is preferably the filler for the photocurable composition of the present invention.

The amount of the filler may be appropriately selected by those skilled in the art, depending on, for example, the type of the filler or the desired viscosity of the photocurable composition. The filler (suitably fumed silica) may be contained at a content proportion of preferably 1 to 10 parts by mass, more preferably 2 to 9 parts by mass, and still more preferably 3 to 8 parts by mass, with respect to 100 parts by mass of the photocurable acrylic resin component. Due to the above content proportion, the photocurable composition of the present invention has a viscosity that makes it easy to use as a sealing material.

One or two or more selected from the group consisting of the above-mentioned "filler" compounds may be used.

### <Photopolymerization initiator>

The photocurable composition of the present invention may contain a photopolymerization initiator.

As the photopolymerization initiator, an acylphosphine oxide-based, α-aminoacetophenone-based, α-hydroxyacetophenone-based, or oxime ester-based photopolymerization initiator is preferably used, and more preferably an α-aminoacetophenone-based photopolymerization initiator is used.

Examples of the acylphosphine oxide-based photopolymerization initiator include bis(2,4,6-trimethylbenzoyl)-phenylphosphine oxide, 2,4,6-trimethylbenzoyl-diphenyl-phosphine oxide, and the like.

Examples of the α-aminoacetophenone-based photopolymerization initiator include 2-methyl-1-(4-methylthiophenyl)-2-morpholinopropan-1-one, 2-benzyl-2-dimethylamino-1-(4- morpholinophenyl)-butanone-1, 2-(dimethylamino)-2-[(4-methylphenyl)methyl]-1-[4-(4-morpholinyl)phenyl]-1-butanone, 4,4'-bis(diethylamino)benzophenone, and the like.

Examples of the α-hydroxyacetophenone-based photopolymerization initiator include 1-hydroxy-cyclohexyl-phenyl-ketone, 2-hydroxy-2-methyl-1-phenyl-propan-1-one, 1-[4-(2-hydroxyethoxy)-phenyl]-2-hydroxy-2-methyl-1-propan-1-one, 2-hydroxy-1-[4-[4-(2-hydroxy-2-methyl-propionyl)-benzyl]phenyl ]-2-methyl-propan-1-one, and the like.

Examples of the oxime ester-based photopolymerization initiator include 1,2-octanedione, 1-[4-(phenylthio)-2-(O-benzoyloxime)], ethanone, 1-[9-ethyl-6-(2-methylbenzoyl)-9H-carbazol-3-yl]-1-(0-acetyloxime), and the like.

One or more selected from the group consisting of the above-mentioned "photopolymerization initiator" compounds may be used.

The photopolymerization initiator may be contained at a content proportion of preferably 0.01 to 10 parts by mass, more preferably 0.1 to 8 parts by mass, and still more preferably 0.2 to 5 parts by mass with respect to 100 parts by mass of the photocurable acrylic resin component.

### [Curing means]

In the present invention, the photocurable composition is a composition having a property of being cured by irradiating the composition with light. The light applied to cure the photocurable composition of the present invention is, for example, ultraviolet ray, electron beam (beta ray), gamma ray, or alpha ray, more preferably ultraviolet ray or electron beam, and even more preferably can be ultraviolet ray.

A device for applying light can be appropriately selected by those skilled in the art depending on the type of light to be applied. A commercially available device may be used as the device. For example, in order to apply the electron beam, an accelerated electron beam taken out from an electron beam accelerator of 20 to 2000 kV is generally used. The electron beam irradiation dose is, for example, 1 to 300 kGy, preferably can be 5 to 200 kGy. In order to apply the ultraviolet ray, a UV irradiation device such as a germicidal lamp, ultraviolet fluorescent lamp, carbon arc, xenon lamp, low pressure mercury lamp, medium pressure mercury lamp, high pressure mercury lamp, ultra-high pressure mercury lamp, metal halide lamp, electrodeless lamp, or the like may be used. The wavelength of the ultraviolet ray applied can be, for example, 200 nm to 400 nm.

### 1-3. Applications of photocurable composition of the present invention

The photocurable composition of the present invention may be used, for example, as a sealing material, and may be used when forming a sealing material. A cured product of a photocurable composition has a lower moisture permeability and is therefore suitable for protecting the sealed interior from external water vapor. That is, the present invention can also provide a cured product of the photocurable composition of the present invention.

According to one preferred embodiment of the present invention, the photocurable composition of the present invention may be used for sealing solar batteries, more particularly for sealing the electrolytic solution or electrolyte that constitutes the solar battery. The solar battery is preferably a dye-sensitized solar battery, a perovskite solar battery, or an organic thin-film solar battery, and particularly preferably can be a dye-sensitized solar battery. The cured product of the photocurable composition of the present invention is particularly suitable for sealing the electrolytic solution or solid electrolyte of dye-sensitized solar batteries.

According to another preferred embodiment of the invention, the photocurable composition of the invention may be used for sealing electronic devices. The electronic device may preferably be a liquid crystal panel or an organic EL panel. The cured product of the photocurable composition of the present invention is particularly suitable for sealing elements of liquid crystal panels or organic EL panels.

### [Production method]

The photocurable composition of the present invention may be produced using stirring means known in the technical field to which the present invention belongs. For example, the photocurable composition can be produced by stirring a photocurable acrylic resin component and a clay mineral powder contained in the photocurable composition of the present invention in a container with a stirrer. As the stirrer, devices known in the art may be used. Stirring conditions such as, for example, the stirring time and the temperature during stirring may also be appropriately set by those skilled in the art.

### [Example of use method]

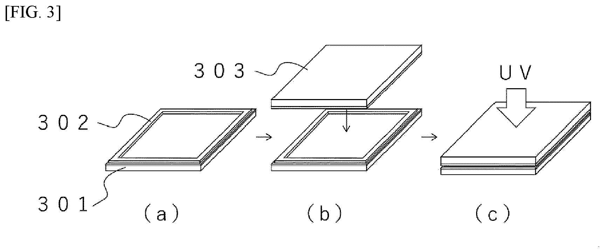

One example of the use method of the photocurable composition of the present invention is described below with reference to FIG. 3.

First, as shown in FIG. 3(a), a photocurable composition 302 of the present invention is applied on a substrate 301. The application can be performed, for example, by surrounding the desired area with the photocurable composition 302 . Next, as shown in FIG. 3 (b), a substrate 303 is overlaid so as to face the substrate 301 with the photocurable composition 302 interposed therebetween. Then, as shown in FIG. 3(c), light (e.g., ultraviolet light) is applied to reach the photocurable composition 302. This light application cures the photocurable composition 302 . As a result, a space defined by the substrates 301 and 303 and a cured product of the photocurable composition 302 is formed.

For example, when manufacturing a dye-sensitized solar battery, the substrates 301 and 303 are, for example, substrates laminated with conductive films, and the photocurable composition is applied onto the conductive films. Then, an electrolytic solution is encapsulated in the space defined by the conductive films and the cured product of the photocurable composition, thereby manufacturing a flexible dye-sensitized solar battery. The cured product of the photocurable composition of the present invention is excellent in low moisture permeability. Therefore, the photocurable composition of the present invention is suitable for use as a sealing material.

The photocurable composition of the present invention may be used as a sealing material also in other types of solar batteries (e.g., perovskite solar batteries or organic thin-film solar batteries) or electronic devices.

### 2. Solar battery

The present invention can also provide a solar battery containing a cured product of the photocurable composition of the present invention. The cured product has improved low moisture permeability. In the solar battery, the cured product is preferably contained as a sealing material, more preferably as a sealing material for sealing the electrolytic solution or solid electrolyte. The solar battery is preferably a dye-sensitized solar battery, a perovskite solar battery, or an organic thin-film solar battery, and more preferably a dye-sensitized solar battery. When the photocurable composition of the present invention is used as a sealing material in these solar batteries, the effects of the present invention are exhibited more remarkably.

The dye-sensitized solar battery of the present invention can have, for example, a structure as shown in FIG. 1 described in "1. Photocurable composition" above. Each of the constitutional components shown in FIG. 1 is described in more detail below.

A transparent glass plate or a plastic film may be used as the transparent substrate 101 . As the plastic film, a polyethylene terephthalate (PET) film may be used, or another transparent and heat-resistant film may be used.

As the transparent conductive film (transparent electrode) 102, for example, an ITO film containing indium oxide and tin oxide may be used. The mass proportions of indium oxide and tin oxide can be, for example, 90 to 99% by mass and 10 to 1% by mass, preferably 92 to 98% by mass and 8 to 2% by mass, respectively. Alternatively, a fluorine-doped tin oxide film (FTO) may be used as the transparent conductive film.

As the substrate 106 constituting the counter electrode substrate of the transparent conductive film 102, for example, glass, a glass plate, or a plastic film may be used. The conductive film 107, like the transparent conductive film 102, may be an ITO film or an FTO film.

Examples of the metal oxide semiconductor forming the metal oxide semiconductor layer 103 include oxides of titanium, zirconium, hafnium, strontium, zinc, indium, yttrium, lanthanum, vanadium, niobium, tantalum, chromium, molybdenum, and tungsten. Among these, titanium dioxide is particularly preferred. Ultrafine titanium dioxide particles having a diameter of 10 to 30 nm are more preferably used as the metal oxide semiconductor. The titanium dioxide particles can form a titanium dioxide film with a large specific surface area suitable for adsorbing dyes.

As the dye 105, dyes known in the art, such as metal-containing dyes or organic dyes, may be used. Examples of the dye 105 include a ruthenium complex [RuL₂(NCS)₂, L=4,4'-dicarboxy-2,2'-bipyridine], a porphyrin dye, a cyanine dye, a C60 derivative, a styrylbenzothiazolium propylsulfonate (BTS), and plant dyes, and the like.

The electrolytic solution that fills the space 108 can be a solution in which an electrolyte is dissolved or dispersed in an organic solvent. As the electrolyte, a redox couple (redox system) such as iodine/iodine compound or bromine/bromine compound may be used, and an iodine/iodine compound combination is particularly preferred.

As the organic solvent for dissolving or dispersing the electrolyte, ethylene carbonate, propylene carbonate, polyethylene glycol, acetonitrile, 3-methoxypropionitrile, or a mixture of two or more thereof may be used.

The electrolytic solution may contain various additives used in the art in addition to the electrolyte and solvent. Examples of the additives include, for example, thickeners, normal temperature molten salts (such as 1-propyl-2,3-dimethylimidazolium iodide, etc.) to reduce viscosity to facilitate ion diffusion, and 4-tert-butylpyridine and the like to prevent reverse current flow for increasing the open electromotive force.

According to a particularly preferred embodiment of the present invention, the above-described electrolytic solution may be an acetonitrile/ethylene carbonate solution containing iodine and lithium iodide.

The dye-sensitized solar battery of the present invention may be produced as appropriate by a production method known to those skilled in the art. The dye-sensitized solar battery of the present invention can be produced, for example, by a production method including the following steps.

### 2-(1) Photocurable composition application step

In this step, the photocurable composition of the present invention is applied on a conductive substrate in which a transparent substrate layer, a transparent conductive film layer, and a metal oxide semiconductor layer to which a dye is adsorbed are laminated in this order, or a conductive substrate in which a conductive film layer and a substrate layer are laminated in this order. The application may be performed by application means such as screen printing or a dispenser. The application location can be appropriately set by a person skilled in the art according to the location where the electrolytic solution or solid electrolyte to be sealed is arranged. The application pattern of the photocurable composition of the present invention may be determined according to the shape of the dye-sensitized solar battery to be manufactured, such as a circular, rectangular, square shape or the like. For example, the photocurable composition of the present invention can be applied to form a line with a width of 0.5 mm to 1 mm surrounding the location where the electrolytic solution or solid electrolyte is arranged.

### 2-(2) Bonding step

In this step, the two conductive substrates are bonded together. The amount applied in the application step can be set so that the thickness of the sealing material after bonding is, for example, 5 µm to 100 µm, more preferably 20 µm to 50 µm.

### 2-(3) Curing step

In this step, the photocurable composition of the present invention is irradiated with light. The photocurable composition of the present invention is cured by the irradiation with the light. Light may be applied through the conductive substrate in which a transparent substrate layer, a transparent conductive film layer, and a metal oxide semiconductor layer are laminated, or may pass between the two conductive substrates.

### 2-(4) Electrolytic solution encapsulation step

In this step, an electrolytic solution is encapsulated within a space defined by the cured photocurable composition of the present invention and the two conductive substrates.

To effect such encapsulation, a portion of the substrate may be provided with an opening, or the photocurable composition of the present invention may be applied such that an opening is formed. An electrolytic solution can be injected into the space through the opening. After the injection, the opening can be sealed with the photocurable composition of the present invention, and then, can be sealed by curing the photocurable composition by irradiating with light. Alternatively, the opening may be sealed using another normal temperature-setting adhesive.

In addition, when a solid electrolyte is used, the solid electrolyte is arranged between the two conductive substrates before the bonding step. Then, after the arrangement, the bonding step and the curing step are performed to manufacture the dye-sensitized solar battery of the present invention.

### 3. Electronic device

The present invention can also provide an electronic device containing a cured product of the photocurable composition of the present invention. The cured product has improved low moisture permeability. In the electronic device, the cured product is preferably contained as a sealing material, more preferably as a sealing material for sealing the element. The electronic device is preferably a liquid crystal panel or an organic EL panel. When the photocurable composition of the present invention is used as a sealing material in these electronic devices, the effects of the present invention are exhibited more remarkably. When the photocurable composition of the present invention is used as a sealing material in these electronic devices, the sealing method may be, for example, the frame sealing method as described above, or the all surface sealing method. The sealing method is not limited to these, and at least part of the element to be protected may be in contact with the cured product of the photocurable composition of the present invention.

The electronic device of the present invention may be manufactured as appropriate by a manufacturing method known to those skilled in the art. For example, placing the element and the photocurable composition such that at least a portion of the element of an electronic device is in contact with the photocurable composition of the present invention, and then irradiating the photocurable composition with light to cure the photocurable composition, are included. As a method of arranging the element and the photocurable composition, for example, the above-described frame sealing method or all surface sealing method may be employed.

### (EXAMPLES)

Hereinafter, the present technology will be described in further detail based on examples and the like. It should be noted that the embodiments and the like described below are examples of representative embodiments and the like of the present technology, and the scope of the present technology should not be construed narrowly.

### (1) Production method

Each component shown in Tables 1 to 5 was weighed and stirred for 30 minutes with a stirrer so that the compositions as shown in Tables 1 to 5 below were obtained, to obtain photocurable compositions of Examples 1 to 17 and Reference Example 1. All units of numerical values in Tables 1 to 5 are parts by mass.

The compound names of the materials shown in Examples are as follows. The following measurement methods for MFR, Tg, average particle size (D50), weight average molecular weight, etc. were carried out according to the respective measurement methods described in "1. Photocurable composition" above.
[Thermoplastic resin]
   Hydrogenated styrene thermoplastic elastomer A (MFR 5 g/10 min (230°C, 2.16 kg load)
   Hydrogenated styrene thermoplastic elastomer B (MFR <0.1 g/10 min (230°C, 2.16 kg load)
   Hydrogenated aromatic petroleum resin C (Tg 125°C)
   Hydrogenated terpene resin D (Tg 105°C)
   Hydrogenated terpene resin E (Tg 125°C)
   Hydrogenated terpene resin F (Tg 150°C)
[Oligomer]
   Oligomer A: Polyisoprene-based urethane acrylate (weight average molecular weight about 8,000 to 10,000)
   Oligomer B: Polybutadiene-based urethane acrylate resin having (meth)acrylic groups at both ends of hydrogenated polybutadiene via urethane bonds
[Monofunctional monomer]
   Dicyclopentanyl acrylate (C₁₃H₁₈O₂) (Tg 120°C)
[Polyfunctional monomer]
   Tricyclodecane dimethanol diacrylate
   Nonanediol diacrylate
[Adhesiveness imparting agent]
   Adhesiveness imparting agent A: (meth)acrylate having a polar group
   Adhesiveness imparting agent B: silane coupling agent
   Tackifier resin C: terpene phenol resin (hydroxyl value 75, SP value 8.8, soluble in at least ketone solvent or acetate solvent (20 to 30°C))
[Fumed silica]
   Fumed silica A: hydrophobic fumed silica surface-treated with dimethylsilyl (dimethyldichlorosilane) (specific surface area 300 m²/g)
   Fumed silica B: hydrophobic fumed silica surface-treated with DDS (dimethyldichlorosilane) (specific surface area 130 m²/g)
   Fumed silica C: hydrophilic fumed silica (specific surface area 300 m²/g)
[Clay mineral powder]
   FG-15 surface-treated product (manufactured by Nippon Talc): plate-like talc (silane coupling agent-treated): 1.5 µm (laser diffraction particle size analysis measurement method: D50)
   P-4 surface-treated product (manufactured by Nippon Talc): plate-like talc (silane coupling agent-treated): 4.5 µm (laser diffraction particle size analysis measurement method: D50)
   PDM-5B (manufactured by Tobii Industries): plate-like synthetic mica: 6 µm (laser diffraction particle size analysis method: D50)
   Nanoace D-600 surface-treated product (manufactured by Nippon Talc): plate-like talc (silane coupling agent-treated: N-phenyl-3-aminopropyltrimethoxysilane:
KBM-573 surface-treated): 0.6 µm (laser diffraction particle size analysis measurement method: D50)
[Polymerization initiator]
   α-Aminoacetophenone compound

### (2) Method for evaluating moisture permeability

Regarding the moisture permeability, the produced cured product of a photocurable composition was measured according to JIS Z 0208 Testing Methods for Determination of the Water Vapour transmission rate of Moisture-Proof Packaging Materials (Dish Method). That is, a photocurable composition was applied to a thickness of 100 µm (±20 µm) on a metal plate coated with Teflon (registered trademark), and ultraviolet ray was applied with a metal halide lamp so that the cumulative light amount was 3000 mJ/cm², to cure the photocurable composition. The resulting cured product was cut into the shape specified by the standard and placed in a container weighing about 5 g of calcium chloride. The container was stored for 24 hours in a thermo-hygrostat of 60°C/90% RH atmosphere, and the water vapor transmission rate (g/m²•day) was calculated from the difference in weight before and after the storage. When the moisture transmission rate of the cured product is 100 g/m²•day or less, it can be determined that the cured product has good performance from the viewpoint of moisture transmission rate. The measurement results of Examples are shown in Tables 1 to 5 below.

### (3) T-peel adhesion test method

According to JIS K 6854-3 (90°C peel test or T-peel test), the T-peel adhesion strength of the produced cured product of the photocurable composition was measured. That is, between two 25 mm × 70 mm ITO film-attached PET films, the photocurable composition was applied and bonded so that the application area was 25 mm × 45 mm and the applied thickness was 100 µm, and the photocurable composition was cured by irradiating with ultraviolet ray so as to obtain a cumulative light amount of 6,000 mJ/cm² with a metal halide lamp. The prepared test piece was pulled using a tensile tester at a test speed of 10 mm/min, and the T-peel adhesion strength (average test force: [N/25 mm]) was measured. When the T-peel adhesion strength was 5 [N/25 mm] or more, the cured product of the photocurable composition was judged to have good performance. Furthermore, the failure state of the peeled surface after peeling was visually confirmed. The measurement results of Example are shown in Table 5 below.

### <Examples 1 to 4 and Reference Example 1>

The moisture permeability of the cured product of the composition of Example 1 containing a clay mineral powder (talc) in a photocurable acrylic resin component was compared with the moisture permeability of the cured product of the composition of Reference Example 1 containing no clay mineral powder, to find that the moisture transmission rate was about half or less. Therefore, by containing a clay mineral powder in a cured product, it is possible to prevent moisture from penetrating through a cured product. Thus, by containing a clay mineral powder as a material, a cured product of a photocurable composition having excellent low moisture permeability was obtained. As a result, a photocurable composition that can be used for sealing materials with lower moisture permeability was provided.

Furthermore, as understood from the results of Examples 1 to 4, a cured product of a photocurable composition having lower moisture permeability was obtained as increasing the amount of the clay mineral powder from 30 parts by mass to 100 parts by mass with respect to 100 parts by mass of the photocurable acrylic resin component. In addition, even when the amount of the clay mineral powder (talc) was 10 parts by mass, a cured product of a photocurable composition having lower moisture permeability was obtained than when the clay mineral powder was not contained. Judging from these results of moisture transmission rate, the rate of decrease in moisture transmission rate decreased from about 80 parts by mass, therefore, considering costs and the like, the range of 30 to 80 parts by mass was considered preferable.

### [Table 1]

**Table 1 (parts by mass)**

| Component | | Reference example 1 | Example 1 | Example 2 | Example 3 | Example 4 |
|---|---|---|---|---|---|---|
| Thermoplasti c resin | Thermoplastic elastomer A | 10 | 10 | 10 | 10 | 10 |
| | Hydrogenated aromatic petroleum resin C | 40 | 40 | 40 | 40 | 40 |
| Oligomer | - | - | - | - | - | - |
| Monofunctio nal monomer | Dicyclopentanyl acrylate | 95 | 95 | 95 | 95 | 95 |
| Polyfunction al monomer | Tricyclodecandimet hanol diacrylate | 5 | 5 | 5 | 5 | 5 |
| Adhesiveness imparting agent | Adhesiveness imparting agent A | 1 | 1 | 1 | 1 | 1 |
| | Adhesiveness imparting agent B | 3 | 3 | 3 | 3 | 3 |
| Fumed silica | Fumed silica A | 5 | 5 | 5 | 5 | 5 |
| Clay mineral powder | FG-15 surface-treated product | 0 | 30 | 50 | 80 | 100 |
| Polymerizati on initiator | α-Aminoacetophenon e compound | 2 | 2 | 2 | 2 | 2 |
| Evaluation | | | | | | |
| Water vapor transmission rate | [g/m²•24 h] (60°C/90% RH) | 68.00 | 31.25 | 26.82 | 20.90 | 20.38 |

### <Examples 5 to 10>

Even if the size of the average particle size (D50) of the clay mineral powder (talc) was changed in the compositions of Examples 5 and 6, a cured product of a photocurable composition having excellent low moisture permeability was obtained.

Further, even when mica was contained instead of talc (Example 10), a cured product of a photocurable composition having excellent low moisture permeability was obtained. Both mica and talc had good dispersibility when the composition was prepared, but the low moisture permeability of the obtained cured product was slightly better when talc was contained than when mica was contained.

Further, from the results of Examples 5 to 9, it is understood that by containing two or more of powders with different average particle sizes, the moisture transmission rate of the cured product was equal to or less than half than when a single powder was contained, even if the powder amounts were the same. Thus, by containing two or more clay mineral powders having different average particle sizes in a photocurable composition, a cured product of the photocurable composition having excellent low moisture permeability was obtained.

### [Table 2]

**Table 2 (parts by mass)**

| Component | | Exam ple 5 | Exam ple 6 | Exam ple 7 | Exam ple 8 | Exam ple 9 | Example 10 |
|---|---|---|---|---|---|---|---|
| Thermoplas tic resin | Thermoplastic elastomer A | 10 | 10 | 10 | 10 | 10 | 10 |
| | Hydrogenated aromatic petroleum resin C | 60 | 60 | 60 | 60 | 60 | 60 |
| Oligomer | - | - | - | - | - | - | - |
| Monofuncti onal monomer | Dicyclopentanyl acrylate | 95 | 95 | 95 | 95 | 95 | 95 |
| Polyfunctio nal monomer | Tricyclodecandime thanol diacrylate | 5 | 5 | 5 | 5 | 5 | 5 |
| Adhesivene ss imparting agent | Adhesiveness imparting agent A | 1 | 1 | 1 | 1 | 1 | 1 |
| | Adhesiveness imparting agent B | 3 | 3 | 3 | 3 | 3 | 3 |
| Fumed silica | Fumed silica A | 1 | 1 | 1 | 1 | 0.2 | 0.2 |
| Clay mineral powder | FG-15 surface-treated product (talc) | - | 80 | 40 | 30 | 35 | - |
| | P-4 surface-treated product (talc) | 80 | - | 40 | 30 | 35 | - |
| | PDM-5B (mica) | - | - | - | - | - | 70 |
| Polymerizat ion initiator | α-Aminoacetophenon e compound | 2 | 2 | 2 | 2 | 2 | 2 |
| Evaluation | | | | | | | |
| Water vapor transmissio n rate | [g/m²•24 h] (60°C/90% RH) | 20.40 | 18.75 | 8.86 | 21.97 | 18.33 | 10.7 |

### <Examples 11 to 13>

When a photocurable acrylic resin component, a clay mineral powder, and a thermoplastic resin (hydrogenated terpene resin) were contained in the compositions of Examples 11 to 13, a cured product of a photocurable composition having more excellent low moisture permeability was obtained as the softening point of the thermoplastic resin (hydrogenated terpene resin) was higher. Further, even when a hydrogenated petroleum resin was contained instead of the hydrogenated terpene resin of the composition of Example 11, a cured product of a photocurable composition having similarly excellent low moisture permeability was obtained. From this, a cured product of a photocurable composition having more excellent low moisture permeability by containing a hydrogenated terpene or hydrogenated petroleum resin aliphatic saturated hydrocarbon resin was obtained.

In addition, the average particle size of the talc contained in Examples 1 to 4 is 1.5 µm and 4.5 µm, the average particle size of the talc contained in Examples 11 to 13 is 0.6 µm, and the average particle size of the mica contained in Example 10 is 6 µm, and therefore, a cured product of a photocurable composition having excellent low moisture permeability can be obtained with a clay mineral powder having an average particle size of about 0.5 to 10 µm.

In addition, in the compositions of Examples 11 to 13, resin toughness was improved by containing a photocurable oligomer.

### [Table 3]

**Table 3 (parts by mass)**

| Component | | Example 11 | Example 12 | Example 13 |
|---|---|---|---|---|
| Thermoplastic resin | Thermoplastic elastomer B | 15 | 15 | 15 |
| | Hydrogenated terpene resin D | 10 | - | - |
| | Hydrogenated terpene resin E | - | 10 | - |
| | Hydrogenated terpene resin F | - | - | 10 |
| Oligomer | Oligomer A | 5 | 5 | 5 |
| Monofunctional monomer | Dicyclopentanyl acrylate | 95 | 95 | 95 |
| Adhesiveness imparting agent | Adhesiveness imparting agent A | 2 | 2 | 2 |
| | Adhesiveness imparting agent B | 2 | 2 | 2 |
| Fumed silica | Fumed silica B | 1 | 1 | 1 |
| Clay mineral powder | Nanoace D-600 surface-treated product | 10 | 10 | 10 |
| Polymerization initiator | α-Aminoacetophenone compound | 2 | 2 | 2 |
| Evaluation | | | | |
| Water vapor transmission rate | (60°C/90% RH) [g/m²•24 h] | 78 | 64 | 59 |

### <Examples 14 to 16>

When a photocurable acrylic resin component, a clay mineral powder, and a thermoplastic resin were contained, a cured product of a photocurable composition having even more excellent low moisture permeability was obtained from the compositions of Examples 14 to 16, by increasing the amount of the thermoplastic resin from 20 or 40 parts by mass to further 60 parts by mass with respect to 100 parts by mass of the photocurable acrylic resin component.

### [Table 4]

**Table 4 (parts by mass)**

| Component | | Example 14 | Example 15 | Example 16 |
|---|---|---|---|---|
| Thermoplasti c resin | Thermoplastic elastomer A | 5 | 5 | 5 |
| | Hydrogenated aromatic petroleum resin C | 20 | 40 | 60 |
| Oligomer | Oligomer B | 15 | 15 | 15 |
| Monofunctio nal monomer | Dicyclopentanyl acrylate | 80 | 80 | 80 |
| Polyfunction al monomer | Tricyclodecandimethano 1 diacrylate | 5 | 5 | 5 |
| Adhesiveness imparting agent | Adhesiveness imparting agent A | 1 | 1 | 1 |
| | Adhesiveness imparting agent B | 3 | 3 | 3 |
| Additive | Acrylate surfactant | 1 | 1 | 1 |
| | Acrylate surfactant | 1 | 1 | 1 |
| Fumed silica | Fumed silica A | 5 | 5 | 5 |
| Filler | FG-15 surface-treated product | 30 | 30 | 30 |
| Polymerizati on initiator | α-Aminoacetophenone compound | 2 | 2 | 2 |
| Evaluation | | | | |
| Water vapor transmission rate | Moisture transmission rate (60°C/90% RH) [g/m²•24 h] | 48.05 | 49.36 | 39.47 |

### <Example 17>

### [Table 5]

**Table 5 (parts by mass)**

| Component | | Example 17 |
|---|---|---|
| Thermoplastic resin | Thermoplastic elastomer A | 18 |
| | Hydrogenated alicyclic petroleum resin C | 10 |
| Oligomer | Oligomer A | 10 |
| Monofunctional monomer | Dicyclopentanyl acrylate | 89 |
| Polyfunctional monomer | Tricyclodecandimethanol diacrylate | 2 |
| Adhesiveness imparting agent | Adhesiveness imparting agent A | 0.5 |
| | Adhesiveness imparting agent B | 1 |
| | Tackifier resin C | 1 |
| Fumed silica | Fumed silica A | 10 |
| Clay mineral powder | P-4 surface-treated product | 10 |
| Photopolymerization initiator | α-Aminoacetophenone compound | 3 |
| Evaluation | | |
| Water vapor transmission rate | Moisture transmission rate (60°C/90% RH) [g/m²•24 h] | 62.92 |
| T-peel adhesion test (base material: ITO-PET) [N/25 mm] | Average test force | 8.18 |
| | Failure state | Cohesive failure |

## Claims

1. A photocurable composition comprising a photocurable acrylic resin component and a clay mineral powder.

2. The photocurable composition according to claim 1, wherein the clay mineral powder contains two or more powders having different average particle sizes, D50's.

3. The photocurable composition according to claim 1, wherein the clay mineral powder is talc and/or mica.

4. The photocurable composition according to any one of claims 1 to 3, further comprising a thermoplastic resin.

5. The photocurable composition according to any one of claims 1 to 4, which is for sealing a solar battery.

6. The photocurable composition according to any one of claims 1 to 4, which is for sealing an electronic device.

7. A cured product of the photocurable composition according to any one of claims 1 to 4.

8. A solar battery comprising a cured product of the photocurable composition according to any one of claims 1 to 4 as a sealing material.

9. An electronic device comprising a cured product of the photocurable composition according to any one of claims 1 to 4 as a sealing material.
